# FASCICULE DE BREVET EUROPEEN

(11) **EP 2 133 228 B1**
(45) Date de publication et mention de la délivrance du brevet: **16.03.2011**
(21) Numéro de dépôt: 09159971.2
(22) Date de dépôt: 12.05.2009
(51) Int. Cl.: B60J 1/02, B62D 25/06

(54) **Véhicule automobile comportant un arceau central de pavillon**
Kraftfahrzeug, das mit einem zentralen Dachholm ausgestattet ist
Automobile comprising a central roll bar on the roof

(30) Priorité: 09.06.2008 FR 0853818
(43) Date de publication de la demande: 16.12.2009
(73) Titulaire: Peugeot Citroën Automobiles SA, 78140 Vélizy-Villacoublay (FR)
(72) Inventeur: Corniere, Eric, 78640 Neauphle le Chateau (FR)
(74) Mandataire: Allain, Laurent

(56) Documents cités:
- WO-A-2006/092128
- FR-A- 2 900 623

## Description

La présente invention concerne un véhicule automobile comportant un arceau central de pavillon.

Le brevet FR2900623 se rapporte à une traverse de pavillon de véhicule automobile obtenue par un tube hydroformé ou un profilé, comprenant une surface supérieure présentant plusieurs marches pour former des zones d'accueil de pavillon à des hauteurs différentes, afin de pouvoir recevoir plusieurs types de pavillons différents.

L'arceau central visé par l'invention s'étend sous le pavillon transversalement par rapport à la direction longitudinale du véhicule, notamment entre les extrémités supérieures des deux pieds centraux de la caisse du véhicule.

Cet arceau central a pour fonction de maintenir la forme arquée du pavillon en cas de choc latéral sur le véhicule et à maintenir le tendu de pavillon par l'intermédiaire de mastic de calage.

Dans un mode de réalisation, l'arceau de pavillon est constitué par un élément allongé, embouti et découpé dans une tôle d'acier, présentant des ondulations qui confèrent a l'arceau la résistance requise pour sa fonction.

La figure 1 représente schématiquement une vue en plan du dessus d'un pavillon 1 s'étendant à l'arrière du bord arrière d'un pare-brise 2 de dimensions normales.

L'arceau 3 s'étendant sous le pavillon 1 est représenté schématiquement par deux traits pointillés.

Cet arceau 3 est situé à l'arrière du bord arrière 2a du pare-brise 2.

La figure 2 représente le dessus d'un véhicule comportant un pare-brise panoramique qui est en partie intégré dans le pavillon 1 ce qui permet aux occupants d'avoir une vision plus haute que dans le cas du véhicule représenté sur la figure 1.

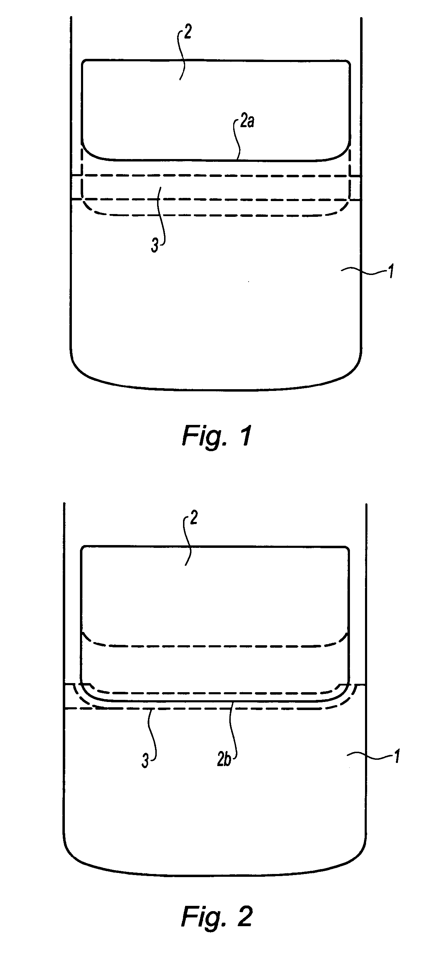

Dans l'exemple de la figure 2, le bord arrière 2b du pare-brise est situé au-dessus de l'arceau central 3.

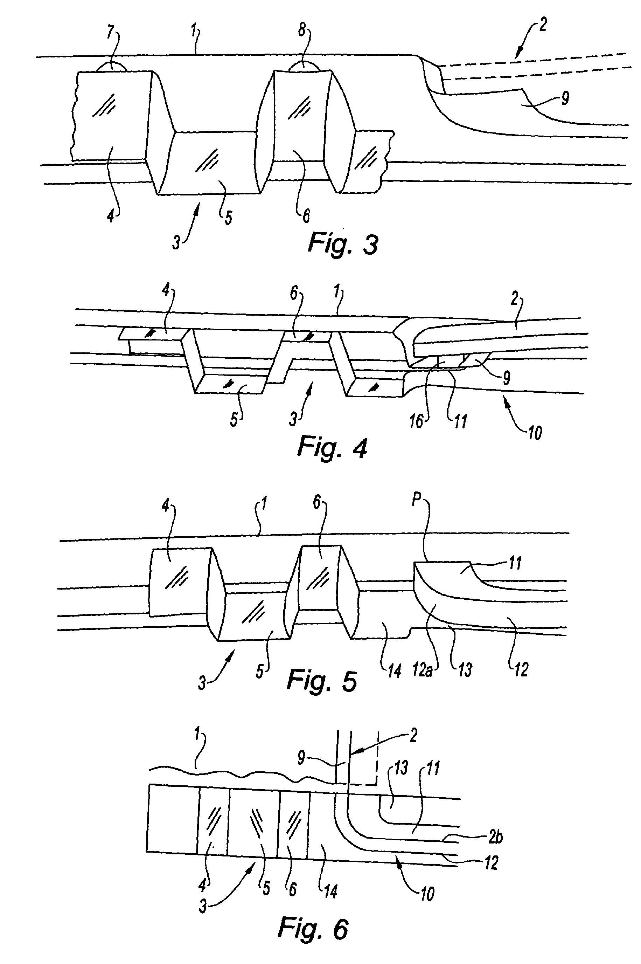

Dans un mode de réalisation connu, tel que représenté sur la figure 3, l'arceau 3 est constitué par un élément allongé embouti découpé en tôle d'acier présentant une série d'ondutations 4, 5, 6, ...

Cet arceau 3 est de façon connue lié à la tôle du pavillon 1 au moyen de cordons de calage 7, 8... en matière synthétique telle que de l'AVC.

Ces cordons de calage sont régulièrement espacés et maintiennent la tôle du pavillon 1 à une distance constante de l'arceau 3.

La figure 3 montre en pointillés le pare-brise 2 intégré dans le pavillon 1 au-dessus de l'arceau 3.

Dans le cas d'un pavillon équipé d'un pare-brise normal tel qu'illustré par la figure 1, les ondulations 4, 5, 6 peuvent être présentes sur toute la longueur de l'arceau.

Dans le cas d'un pavillon équipé d'un pare-brise panoramique les ondulations 4, 5, 6 de l'arceau 3 ne peuvent être présentes dans la zone centrale du pavillon dans laquelle s'étend la partie arrière du pare-brise, étant donné que le bord 9 du pavillon 1 (voir figure 3) sur lequel, le pare-brise 2 doit être collé, fait saillie vers le bas.

Ainsi, on est obligé actuellement de réaliser deux types différents d'arceau, à savoir un premier arceau adapté à un pavillon équipé d'un pare-brise normal, tel que montré par la figure 1 et un second arceau adapté à un pavillon équipé d'un pare-brise panoramique (vision haute).

La mise en oeuvre de ces deux arceaux différents augmente les coûts de fabrication et de main d'oeuvre.

Le but de la présente invention est de remédier à cet inconvénient.

Ce but est atteint selon l'invention, grâce à un véhicule automobile comportant un arceau central de pavillon s'étendant transversalement à la direction longitudinale du véhicule sous le pavillon, cet arceau étant constitué par un élément allongé embouti découpé en tôle présentant des ondulations, fixé à la tôle du pavillon au moyen de cordons de calage en matière synthétique, caractérisé en ce que ledit arceau central est adapté pour être fixé soit sous un premier type de pavillon dit normal dans lequel le bord arrière du pare-brise est situé en avant de l'arceau central, soit sous un second type de pavillon dans lequel le pare-brise est en partie intégré dans le pavillon et son bord arrière est situé au-dessus de l'arceau central et en ce que cet arceau central comprend une zone centrale reliant deux parties présentant des ondulations, adaptée pour s'étendre sous le bord arrière du pare-brise, cette zone centrale de l'arceau étant dépourvue desdites ondulations.

Ainsi, un arceau unique comportant une zone centrale modifiée peut convenir aussi bien pour un pavillon de type normal que pour un pavillon équipé d'un pare-brise panoramique.

De préférence, ladite zone centrale de l'arceau présente une partie qui peut s'appuyer sous le bord de la tôle du pavillon sur lequel est collé le bord adjacent du pare-brise.

De préférence également, ladite partie suit le profil du bord de la tôle du pavillon sur lequel est collé le bord arrière du pare-brise.

Ainsi, l'arceau supporte grâce à la partie ci-dessus, le bord de la tôle du pavillon sur lequel est collé le bord arrière du pare-brise panoramique.

Selon une version préférée de l'invention, ladite zone centrale de l'arceau présente une partie emboutie de section transversale en U, la base dudit U constituant ladite partie qui suit le profil du bord de la tôle sur lequel est collé le bord arrière du pare-brise.

Cette section transversale en U confère à cette partie emboutie une grande résistance mécanique.

Selon d'autres particularités de l'invention:
- ladite partie emboutie de section transversale en U est emboutie sur une bande de tôle située dans le prolongement des deux parties présentant les ondulations ;
- ladite bande de tôle est située dans le prolongement d'une bande de tôle sur laquelle font saillie lesdites ondulations ;
- la hauteur de la partie emboutie de section transversale en U est inférieure à la hauteur desdites ondulations ;
- ladite partie emboutie de section transversale en U présente à chacune de ses extrémités adjacentes à une partie présentant des ondulations une zone courbe dans laquelle la section en U s'élargit progressivement et se termine dans un plan situé sur l'un des bords de la bande de tôle présentant ladite partie emboutie.

D'autres particularités et avantages de l'invention apparaîtront encore tout au long de la description ci-après.

Aux dessins annexés, donnés à titre d'exemples, non limitatifs:
- la figure 1 est une vue de dessus du pavillon d'un véhicule automobile équipé d'un pare-brise normal,
- la figure 2 est une vue analogue à la figure 1, le véhicule étant équipé d'un pare-brise panoramique,
- la figure 3 est une vue en coupe et en perspective partielle d'un pavillon et d'un arceau central, montrant l'ouverture réalisée dans le pavillon destinée à recevoir la partie arrière d'un pare-brise panoramique,
- la figure 4 est une vue analogue à la figure 3 montrant une partie de la zone centrale de l'arceau supportant le pare-brise panoramique,
- la figure 5 est une vue analogue à la figure 3 montrant la partie de la zone centrale de l'arceau, dans le cas d'un pavillon normal.
- La figure 6 est une vue de dessus montrant avec arrachements le pavillon, l'arceau central et la partie arrière du pare-brise en position sur un bord du pavillon.

Les figures 3 à 5 représentent un arceau central 3 de pavillon pour véhicule automobile s'étendant transversalement à la direction longitudinale du véhicule sous le pavillon 1.

Cet arceau 3 est constitué par un élément allongé embouti découpé en tôle présentant des ondulations 4, 5, 6, fixé à la tôle du pavillon 1 au moyen de cordons de calage 7, 8 en matière synthétique.

Conformément à l'invention, l'arceau central 3 est adapté pour être fixé soit sous un premier type de pavillon1 dit normal dans lequel (voir figure 1) le bord arrière 2a du pare-brise 2 est situé en avant de l'arceau central 3, soit sous un second type de pavillon dans lequel (voir figure 2) le pare-brise 2 est en partie intégré dans le pavillon 1 et son bord arrière 2b est situé au-dessus de l'arceau central 3.

A cet effet, l'arceau central 3 comprend (voir figure 4) une zone centrale 10 reliant deux parties latérales présentant des ondulations telles que 4, 5, 6, adaptée pour s'étendre sous le bord arrière du pare-brise 2.

Cette zone centrale 10 de l'arceau 3 est dépourvue desdites ondulations 4, 5,6.

Les figures 4 et 5 montrent que la zone centrale 10 de l'arceau 3 présente une partie 11 qui peut s'appuyer (voir figure 4) sous le bord 9 de la tôle du pavillon 1 sur lequel est collé par un cordon de colle 16 le bord adjacent du pare-brise 2.

Cette partie 11 (voir figure 6) suit le profil du bord 9 de la tôle du pavillon 1 sur lequel est collé le bord arrière 2b du pare-brise 2.

De plus, la zone centrale 10 de l'arceau 3 présente (voir figure 5) une partie emboutie 12 de section transversale en U.

La base de ce U constitue la partie 11 qui suit le profil du bord 9 de la tôle sur lequel est collé le bord arrière du pare-brise 2.

Cette partie emboutie 12 de section transversale en U est emboutie (voir figure 5) sur une bande de tôle 13 située dans le prolongement des deux parties présentant les ondulations 4, 5, 6.

Cette bande de tôle 13 est située dans le prolongement d'une bande de tôle 14 sur laquelle font saillie les ondulations 4, 5, 6.

De plus, la hauteur de la partie emboutie 12 de section transversale en U est inférieure à la hauteur des ondulations 4, 5, 6 afin de compenser la différence de niveau entre le bord 9 de la tôle du pavillon et le pavillon proprement dit.

Par ailleurs, la partie emboutie 12 de section transversale en U présente (voir figure 5) à chacune de ses extrémités adjacentes à une partie présentant des ondulations 4, 5, 6 une zone courbe 12a dans laquelle la section en U s'élargit progressivement et se termine dans un plan P situé sur l'un des bords de la bande de tôle 13 présentant la partie emboutie 12.

Il ressort donc de la description ci-dessus que la zone centrale 10 de l'arceau 3 située entre deux parties latérales présentant les ondulations 4, 5, 6 a été modifiée pour être compatible avec l'intégration d'un pare-brise panoramique dans le pavillon 1 au-dessus de l'arceau 3.

A cet effet, la zone centrale 10 de l'arceau 3 est dépourvue d'ondulations et présente une partie emboutie 12, conférant à cette zone une résistance mécanique suffisante grâce à sa section en U.

Cette partie emboutie 12 suit le profil du bord 9 du pavillon sur lequel est collé le pare-brise panoramique, dans la zone de son bord arrière.

L'arceau central selon l'invention est également compatible avec un pavillon normal.

L'invention permet ainsi d'éviter la fabrication de deux arceaux distincts, ce qui simplifie la gestion des pièces et réduit les coûts.

## Revendications

1. Véhicule automobile comportant un arceau central (3) de pavillon s'étendant transversalement à la direction longitudinale du véhicule sous le pavillon (1), cet arceau (3) étant constitué par un élément allongé embouti et découpé en tôle présentant des ondulations (4, 5, 6), fixé à la tôle du pavillon (1) au moyen de cordons de calage (7, 8) en matière synthétique, **caractérisé en ce que** ledit arceau central (3) est adapté pour être fixé soit sous un premier type de pavillon dit normal dans lequel le bord arrière du pare-brise (2) est situé en avant de l'arceau central (3), soit sous un second type de pavillon dans lequel le pare-brise (2) est en partie intégré dans le pavillon (1) et son bord arrière (2b) est situé au-dessus de l'arceau central (3) et **en ce que** cet arceau central (3) comprend une zone centrale (10) reliant deux parties présentant des ondulations (4, 5, 6), adaptée pour s'étendre sous le bord arrière (2b) du pare-brise (2), cette zone centrale (10) de l'arceau (3) étant dépourvue desdites ondulations (4, 5, 6).

2. Véhicule automobile selon la revendication 1, **caractérisé en ce que** ladite zone centrale (10) présente une partie (11) qui peut s'appuyer sous le bord (9) de la tôle du pavillon (1) sur lequel est collé le bord adjacent du pare-brise (2).

3. Véhicule automobile selon la revendication 2, **caractérisé en ce que** ladite partie (11) suit le profil du bord (9) de la tôle du pavillon (1) sur lequel est collé le bord arrière (2b) du pare-brise (2).

4. Véhicule automobile selon la revendication 3, **caractérisé en ce que** ladite zone centrale (10) de l'arceau (3) présente une partie emboutie (12) de section transversale en U, la base dudit U constituant ladite partie (11) qui suit le profil du bord (9) de la tôle sur lequel est collé le bord arrière (2b) du pare-brise (2).

5. Véhicule automobile selon la revendication 4, **caractérisé en ce que** ladite partie emboutie (12) de section transversale en U est emboutie sur une bande de tôle (13) située dans le prolongement des deux parties présentant les ondulations (4, 5, 6).

6. Véhicule automobile selon la revendication 5, **caractérisé en ce que** ladite bande de tôle (13) est située dans le prolongement d'une bande de tôle (14) sur laquelle font saillie lesdites ondulations (4, 5, 6).

7. Véhicule automobile selon la revendication 6, **caractérisé en ce que** la hauteur de la partie emboutie (12) de section transversale en U est inférieure à la hauteur desdites ondulations (4, 5, 6).

8. Véhicule automobile selon l'une des revendications 5 à 7, **caractérisé en ce que** ladite partie emboutie (12) de section transversale en U présente à chacune de ses extrémités adjacentes à une partie présentant des ondulations une zone courbe (12a) dans laquelle la section en U s'élargit progressivement et se termine dans un plan (P) situé sur l'un des bords de la bande de tôle (13) présentant ladite partie emboutie (12).

## Claims

1. A motor vehicle including a central roll bar (3) of a roof extending transversely to the longitudinal direction of the vehicle under the roof (1), this roll bar (3) consisting of an elongated element which is stamped and cut into a sheet having ripples (4, 5, 6), fastened to the sheet of the roof (1) by means of setting cords (7, 8) of synthetic material, **characterised in that** said central roll bar (3) is adapted to be fastened either under a first type of roof, known as a normal roof, in which the rear edge of the windscreen (2) is located at the front of the central roll bar (3), or under a second type of roof in which the windscreen (3) is partly integrated into the roof (1) and its rear edge (2b) is located above the central roll bar (3) and **in that** this central roll bar (3) includes a central area (10) connecting two parts having ripples (4, 5, 6), adapted to extend under the rear edge (2b) of the windscreen (2), this central area (10) of the roll bar (3) being free from said ripples (4, 5, 6).

2. The motor vehicle according to claim 1, **characterised in that** said central area (10) has a part (11) which can rest under the edge (9) of the sheet of the roof (1) to which is glued the adjacent edge of the windscreen (2).

3. The motor vehicle according to claim 2, **characterised in that** said part (11) follows the profile of the edge (9) of the sheet of the roof (1) to which is glued the rear edge (2b) of the windscreen (2).

4. The motor vehicle according to claim 3, **characterised in that** said central area (10) of the roll bar (3) has a stamped part (12) with a U cross-section, the bottom of said U forming said part (11) which follows the profile of the edge (9) of the sheet to which is glued the rear edge (2b) of the windscreen (2).

5. The motor vehicle according to claim 4, **characterised in that** said stamped part (12) with a U cross-section is stamped onto a sheet metal strip (13) located as a continuation of the two parts having the ripples (4, 5, 6).

6. The motor vehicle according to claim 5, **characterised in that** said sheet metal strip (13) is located as a continuation of a sheet metal strip (14) on which project said ripples (4, 5, 6).

7. The motor vehicle according to claim 6, **characterised in that** the height of the stamped part (12) with a U cross-section is lower than the height of said ripples (4, 5, 6).

8. The motor vehicle according to one of claims 5 to 7, **characterised in that** said stamped part (12) with a U cross-section has at each of its ends adjacent to a part having ripples a bent area (12a) in which the U cross-section gradually broadens and ends in a plane (P) located on one of the edges of the sheet metal strip (13) having said stamped part (12).

## Patentansprüche

1. Kraftfahrzeug mit einem zentralen Überrollbügel (3), der sich quer zur Längsrichtung des Fahrzeugs unter dem Dach (1) erstreckt, wobei dieser Überrollbügel (3) aus einem länglichen Element besteht, das aus Blech gestanzt und ausgeschnitten ist, das Wellen (4, 5, 6) aufweist, und an dem Blech des Dachs (1) mithilfe von Klemmschnüren (7, 8) aus synthetischem Material befestigt ist, **dadurch gekennzeichnet, dass** der zentrale Überrollbügel (3) angepasst ist, um entweder unter einem ersten, so genannten normalen Dachtyp befestigt zu werden, bei dem sich der hintere Rand der Windschutzscheibe (2) vor dem zentralen Überrollbügel (3) befindet, oder unter einem zweiten Dachtyp, bei dem die Windschutzscheibe (2) teilweise in das Dach (1) integriert ist und ihr hinterer Rand (2b) sich oberhalb des zentralen Überrollbügels (3) befindet, und **dadurch**, dass dieser zentrale Überrollbügel (3) einen zentralen Bereich (10) umfasst, der zwei Teile mit Wellen (4, 5, 6) verbindet, dazu angepasst, um sich unter dem hinteren Rand (2b) der Windschutzscheibe (2) zu erstrecken, wobei dieser zentrale Bereich (10) des Überrollbügels (3) die Wellen (4, 5, 6) nicht aufweist.

2. Kraftfahrzeug nach Anspruch 1, **dadurch gekennzeichnet, dass** der zentrale Bereich (10) einen Teil (11) aufweist, der sich unter dem Rand (9) des Blechs des Dachs (1), auf das der benachbarte Rand der Windschutzscheibe (2) aufgeklebt ist, abstützen kann.

3. Kraftfahrzeug nach Anspruch 2, **dadurch gekennzeichnet, dass** der Teil (11) dem Profil des Rands (9) des Blechs des Dachs (1) folgt, auf das der hintere Rand (2b) der Windschutzscheibe (2) aufgeklebt ist.

4. Kraftfahrzeug nach Anspruch 3, **dadurch gekennzeichnet, dass** der zentrale Bereich (10) des Überrollbügels (3) einen gestanzten Teil (12) mit U-förmigem Querschnitt aufweist, wobei die Basis des U den Teil (11) bildet, der dem Profil des Rands (9) des Blechs folgt, auf den der hintere Rand (2b) der Windschutzscheibe (2) aufgeklebt ist.

5. Kraftfahrzeug nach Anspruch 4, **dadurch gekennzeichnet, dass** der gestanzte Teil (12) mit U-förmigem Querschnitt in einem Blechstreifen (13) gestanzt ist, der sich in der Verlängerung der zwei Teile mit den Wellen (4, 5, 6) befindet.

6. Kraftfahrzeug nach Anspruch 5, **dadurch gekennzeichnet, dass** sich der Blechstreifen (13) in der Verlängerung eines Blechstreifens (14) befindet, aus dem die Wellen (4, 5, 6) vorspringen.

7. Kraftfahrzeug nach Anspruch 6, **dadurch gekennzeichnet, dass** die Höhe des gestanzten Teils (12) mit U-förmigem Querschnitt geringer als die Höhe der Wellen (4, 5, 6) ist.

8. Kraftfahrzeug nach einem der Ansprüche 5 bis 7, **dadurch gekennzeichnet, dass** der gestanzte Teil (12) mit U-förmigem Querschnitt an jedem seiner Enden, die einem Teil mit Wellen benachbart sind, einen gekrümmten Bereich (12a) aufweist, in dem sich der U-förmige Querschnitt zunehmend erweitert und in einer Ebene (P) endet, die sich auf einem der Ränder des Blechstreifens (13) befindet, der den gestanzten Teil (12) aufweist.
